# EUROPEAN PATENT APPLICATION

(11) **EP 1 850 264 A1**
(43) Date of publication of application: **31.10.2007**
(21) Application number: 06713685.3
(22) Date of filing: 14.02.2006
(51) Int. Cl.: G06F 21/24

(54) **DATA MANAGEMENT METHOD USING EXTERNAL RECORDING MEDIUM WRITE DEVICE AND DATA MANAGEMENT SYSTEM**

(30) Priority: 14.02.2005 JP 2005035661
(71) Applicant: Seiko Epson Corporation, Shinjuku-ku Tokyo 163-0811 (JP)
(72) Inventor: NISHIOKA, Atsushi, a-shi, Nagano, 3928502 (JP); ARAI, Kenichiro, a-shi, Nagano, 3928502 (JP); EBINA, Koichi, a-shi, Nagano, 3928502 (JP); GOTO, Akihiro, a-shi, Nagano, 3928502 (JP); MAESHIMA, Hidetoshi, a-shi, Nagano, 3928502 (JP)
(74) Representative: Hoffmann, Eckart
(86) International application number: PCT/JP2006/302544
(87) International publication number: WO 2006/085657

(57) **Abstract**

A data management system that enables data on a network such as an internal LAN to be integratedly managed and is able to reliably prevent the data from leakage is proposed.

A data management system 1 has a network to which a management server 4 for data management, a plurality of client PCs 3 having a data processing function, an optical disk publisher 5 that issues a CD or a DVD into which the data is recorded are connected. The data prepared in the respective client PCs 3 is performed by issuing the CD by the optical disk publisher 4. The optical disk publisher issues the CD to only an authorized user.

## Description

### FIELD OF THE ART

The present invention relates to a data management method and a data management system with a high level of security uses an optical disk publisher or other external medium writing device to write data into a CD, DVD, or other optical disk and reliably prevents leakage of confidential data of a corporation or other organization.

### BACKGROUND ART

Generally in a corporation or other organization, a LAN or other network is constructed, and a management server, a plurality of client PCs, and output terminals, such as printers, etc., are connected to the network. A user of this network can prepare and edit various documents, graphic forms, etc., using a client PC. The user can also store and manage prepared data in a built-in memory of the client PC or write the prepared data into a CD, DVD, or other portable external recording medium and freely remove the data to the exterior. The user can also access the management server via the network, download and print out the necessary data or write the data into a recording medium and readily remove the data to the exterior.

Data prepared on a client PC are thus normally stored in a built-in memory, etc., in many cases. Under such circumstances, there is a high possibility that confidential data are stored in each individual client PC, and there is thus a high risk that the confidential data can be taken out to the exterior easily.

The risk of data leakage can be reduced by managing the confidential data in an integrated manner in the management server and by restricting access. However, once access is permitted, the data can be printed out or written into a portable external recording medium and readily taken out to the exterior, and the risk of data leakage, etc. is still high. Also, in a case of integrated management in the management server, there is a high possibility that the volume of data accumulated therein will become enormous, and costs accompanying the expansion of the management server capacity and operation costs may increase accordingly.

A data management system that provides a measure for preventing leakage of printing data is disclosed in Patent Document 1. The system disclosed in this document is arranged so that all printing data from a client side are printed via a server, a printing log is acquired, and tracking in the case of information leakage is enabled by accumulation and storage of the acquired printing log and printing data.
Patent Document 1: Japanese Patent Publication No. 2003-330677A

### DISCLOSURE OF THE INVENTION

### PROBLEMS TO BE SOLVED BY THE INVENTION

However, with this system, although printing data can be managed, data that are prepared at each client terminal and held individually at each client terminal cannot be managed. Also, data leakage by data being taken out to the exterior upon being written into a portable external recording medium at a client terminal cannot be prevented.

In any case, the current circumstances are such that conventionally, a system, that can reliably manage all data prepared at respective client terminals connected to a network, has not been proposed.

The present invention has been made in view of this point and an object thereof is to provide a data management method and a data management system that reliably prevents leakage of data on an internal LAN or other network.

### SUMMARY OF THE INVENTION

The present invention takes note of an optical disk publisher or other external recording medium writing device and construct a data management method and a data management system that connect and use such an optical disk publisher to and on a network to manage the output of data on the network to the exterior and thereby reliably prevent the leakage of the data to the exterior.

That is, the data management method and the data management system according to the present invention is arranged as follows.

(1) A data management method in a network to which a management server, a plurality of client terminals having a data processing function and an external recording medium writing device that writes data into an external recording medium and issues the external recording medium are communicably connected, the data management method comprising: a step for outputting, from one of the client terminals, a writing request for writing data into the external recording medium; a step for permitting, in another one of the client terminals, the external recording medium writing device to write the data into the external recording medium in response to the writing requests a step for recording the data into the external recording medium by the external recording medium writing device in response to the permission; and a step for removably outputting the external recording medium into which the data has been written from the external recording medium writing device in response to input of predetermined authentication information corresponding to the permission.
(2) The data management method as set forth in (1), wherein the data is integratedly managed by the management server.
(3) The data management method as set forth in any of (1) or (2), wherein: a user who requests the output of the data is specified under management of the management server when the data is output; and only the specified user is permitted to remove the external recording medium into which the data has been written from the external recording medium writing device.
(4) The data management method as set forth in any of (1) to (3), wherein: the management server manages a history for issuing the external recording medium by the external recording medium writing device; and the history includes at least identification information for identifying the issued external recording medium, information for specifying the issued data, information for identifying issue destination and information regarding the issuing date and time.
(5) The data management method as set forth in any of (1) to (4), wherein when issuing the external recording medium, the information for identifying the external recording medium is written and the information is printed on a label surface.
(6) The data management method as set forth in any of (1) to (5), the data management method using the external recording medium writing device, wherein at least a portion of the data under the management of the management server is written on the external recording medium by the external recording medium writing device and the external recording medium is managed.
(7) The data management method as set forth in (4), wherein: an external recording medium disposer for destroying recorded information on the external recording medium that has become unnecessary, is connected to the network; and the management server manages permission and denial of disposal of issued external recording medium and a history of disposal.
(8) The data management method as set forth in any of (1) to (7), wherein the external recording medium writing device performs writing and issuing operation on at least one of an optical disk, magneto-optical disk, semiconductor memory and magnetic recording medium as the external recording medium.
(9) The data management system in which a management server, a plurality of client terminals having a data processing function and an external recording medium writing device that writes data into an external recording medium and issues the external recording medium are communicably connected via a network, wherein: one of the client terminals outputs a writing request for writing data into the external recording medium to the other one of the client terminals; another one of the client terminals permits the external recording medium writing device to write the data into the external recording medium in response to the writing request; and the external recording medium writing device records the data into the external recording medium in response to the permission and removably outputs the external recording medium into which the data has been written in response to input of predetermined authentication information corresponding to the permission.
(10) The data management system as set forth in (9), wherein the data is integratedly managed by the management server.
(11) The data management system as set forth in any of (9) or (10), wherein: the management server specifies a user who requests the output of the data via the client terminals; the external recording medium writing device permits only the specified user to remove the external recording medium into which the requested data has been written.
(12) The data management system as set forth in any of (9) to (11), wherein: the management server manages a history for issuing the external recording medium by the external recording medium writing device; and the history includes at least identification information for identifying the issued external recording medium, information for specifying the issued data, information for identifying issue destination and information regarding the issuing date and time.
(13) The data management system as set forth in (12), wherein when issuing the external recording medium, the external recording medium writing device writes the information for identifying the external recording medium and prints the identification information on a label surface of the external recording medium.
(14) The data management system as set forth in any of (9) to (13), wherein: the data management system includes a medium storage device that stores the external recording medium issued from the external recording medium writing device; and the management server writes at least a portion of the data into the external recording medium by the external recording medium writing device and stores the written external recording medium in the medium storage device, thereby managing the external recording medium.
(15) The data management system as set forth in any of (9) to (14), comprising: an external recording medium disposer for destroying recorded information on the external recording medium that has become unnecessary, wherein the management server manages permission and denial of disposal of issued external recording medium and a history of disposal based on the identification information that has been provided on the external recording medium when issuing.
(16) The data management system as set forth in any of (9) to (15), wherein: the external recording medium is one of an optical disk, magneto-optical disk, semiconductor memory and magnetic recording medium, and the external recording medium writing device performs writing operation and issuing operation on at least one of these external recording medium.

With the data management method and the data management system according to the present invention, the output of data to the exterior of the network is performed from the external recording medium writing device that is connected to the network. For example, when all of the data on the network are to be data to be subject to management, data storage functions, such as built-in HDDs, etc., and data output functions, such as CD drives and other optical disk drives, etc., may be removed from the respective client terminals, and all of the data prepared at the respective client terminals may be managed in an integrated manner at the management server. By carrying out integrated management, the taking out of data to the exterior from each individual client terminal can be reliably prevented. Because the output of data can also be managed integratedly at the external recording medium writing device, etc., data that are taken out to the exterior can also be reliably managed.

Here, preferably when the data are output, the user who requests the output of the data is specified under the management of the management server, and only the specified user is permitted to remove the external recording medium, into which the data have been written, from the external recording medium writing device. Because users who remove data to the exterior are thereby managed integratedly by the management server, the risk of leaking confidential information, etc., can be made extremely low.

Also, preferably, the management server manages a history of issuing of external recording media by the external recording medium writing device, and the issuing history includes at least identification information that identifies an external recording medium that is issued, information specifying the issued data, information specifying the issue destination, and information concerning the issuing date and time. When a leak of confidential information occurs, the leakage path can be readily tracked based on this history.

Furthermore, preferably, when issuing an external recording medium, the external recording medium writing device writes in the above-described identification information for identifying the external recording medium and prints this information on a label surface. Based on this information, external recording media that are issued, in other words, taken out to the exterior, can be managed integratedly.

Also, preferably, at least a portion of the data under the management of the management server is written into an external recording medium by the external recording medium writing device, and this external recording medium is managed. When integrated management of all of the data on the network is performed by the management server, there is a high possibility that the storage capacity required of the management server will become enormous. By writing the data managed by the management server into external recording media as necessary and storing these external recording media, the capacity increase required of the management server can be suppressed.

Also, preferably, a medium disposer, for destroying recorded information in an external recording medium that has become unnecessary, is connected to the network, and the management server manages the permission and denial of permission of disposal of issued external recording medium and a disposal history. By this arrangement, leakage of confidential information, for example, from an unnecessary external recording medium that has been returned, etc., can be prevented.

Preferably in order to improve the security of the network, arrangements are made so that login to the network is permitted when user-specifying information, provided in advance, is input from an above-described client terminal, and when a request to output data is input from the client terminal, the system waits until an authentication code, expressing permission to output the data, is issued from an authentication authority, and when the authentication code is issued, the code is used to access the external recording medium writing device from the client terminal to make an external recording medium in which the requested data are written, be issued.

As examples of external recording media, optical disks, magneto-optical disks, semiconductor memories, magnetic recording media, etc., can be used. As the external recording medium writing device, a device that performs a writing operation on one type or a plurality of types of such recording media and performs an operation of issuing external recording media on which writing has been performed can be used.

### EFFECTS OF THE INVENTION

The data management method and the data management system according to the present invention are a method and a system for managing data in a network, in which are communicably connected a management server, a plurality of client terminals that have data processing functions, and an external recording medium writing device that writes data into an external recording medium and issues the external recording medium, and are arranged so that a write request for writing data into an external recording medium is output from an above-described client terminal, the writing of the data into the external recording medium according to the write request is permitted at another client terminal, the data are recorded into the external recording medium by means of the external recording medium writing device in accordance with the permission, and, in accordance with predetermined authentication information corresponding to the permission, the external recording medium, into which the data have been written, is removably output from the external recording medium writing device.

Thus, with the present invention, because not only is the permission to write data into an external recording medium provided via another client terminal but the removal of the data-written external recording medium, which has been prepared after being permitted, is also managed according to the authentication information corresponding to the permission, implementation not only of management simply of preparation of external recording media but also of system management that enables only users provided with permission to remove the external recording media is made possible. Thus, in regard to the output to the exterior of data of a high degree of importance or confidentiality, the security level can be improved significantly in comparison to the conventional art. A system, by which the leakage of confidential data, etc., can be prevented readily, can thus be constructed.

Also, with the data management method and the data management system according to the present invention, by arranging so that at least a portion of the data prepared at the respective client terminals connected to the network is managed integratedly at the management server and the output of the data out of the network is performed via the external recording medium writing device connected to the network, for example, all data on the network can be handled as data subject to management, and the output to the exterior of data of a high level of importance or confidentiality can be performed by an embodiment in which an external recording medium is issued via the external recording medium writing device. Integrated management of the data on the network can thus be carried out reliably, and a system that can reliably prevent the leakage of confidential data, etc., can be constructed.

Also, because the external recording medium writing device is used, management of the data issued to the exterior can be carried out reliably. Furthermore, by applying copy guarding, encryption, and other security arts by known methods to the issued CDs, DVDs, and other external recording media, copying of data, browsing of data by persons other than users with data access permission, etc., can be prevented reliably.

Furthermore, by writing and storing, in an external recording medium, a portion of the data managed integratedly at the management server, increases of data can be accommodated.

### BEST MODE FOR CARRYING OUT THE INVENTION

Embodiments of a data management system using an external recording medium writing device, to which present invention is applied, shall now be described with reference to the drawings.

### (First Embodiment)

A first embodiment of a data management system using an external recording medium writing device according to the present invention shall be described first.

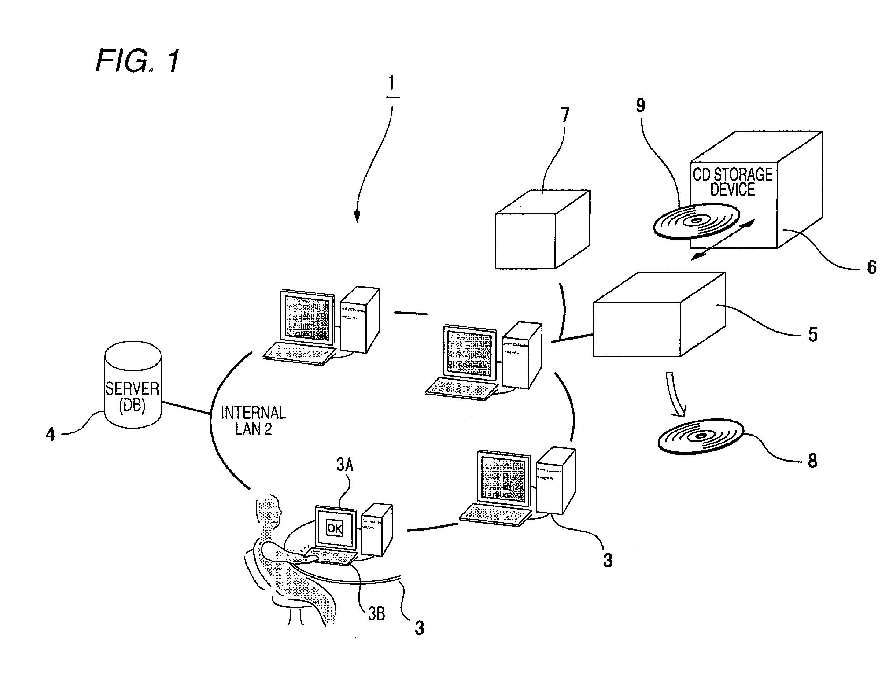

FIG. 1 is a schematic arrangement diagram of the data management system according to the first embodiment and shows an example of applying the system according to the present invention to an internal LAN of a corporation.

The data management system 1 according to the present embodiment has the internal LAN 2 as a network, a plurality of client PCs 3, connected to the internal LAN 2, a management server 4 that manages the internal LAN 2, and a single, optical disk publisher 5 (external recording medium writing device) that is connected to the internal LAN 2 and writes and records data into a CD, DVD, or other optical disk (external recording medium). Also, with the present embodiment, an optical disk storage device 6 that stores CDs, DVDs, and other optical disks into which data have been written, and an optical disk crasher 7, for disposal of the data in a CD, DVD, or other optical disk to prevent reading of the data from the optical disk, are connected to the internal LAN 2. The optical disk storage device 6 and the optical disk crasher 7 may be respectively connected directly to the internal LAN 2, or may be connected to the internal LAN 2 via the optical disk publisher 5.

Each client PC 3 has basically the same arrangement as a generally used PC (personal computer) and has connected thereto a keyboard, mouse, or other input device 3A and a display or other display device 3B. In the present embodiment, the client PCs 3 do not have a hard disk drive or other large volume storage medium that stores and holds prepared data, etc., and also do not have data output functions, such as a writing drive that writes data into an optical disk, magnetic disk, etc., and a printer driver that outputs data to a printer. Thus, although the data can be output to the display device 3A, the data cannot be output by other means from the client PC 3 outside of the internal LAN 2.

The management server 4 is a server that manages the respective client PCs 3 via the internal LAN 2. The management server 4 has a hard disk drive or other storage device that stores data prepared at the respective PCs 3. The data prepared at the respective client PCs 3 are supplied to the management server 4 via the internal LAN 2, are stored in the hard disk drive, and are managed integratedly by the management server 4. Also, in a login process from a client PC 3, the management server 4 permits the login based on input of a user ID and password, provided to a user (employee) in advance, or input of the user ID and biometric information, etc.

Also, a database DB, which is managed integratedly, is provided in the hard disk inside the management server 4, and in this database DB, data prepared at the respective PCs 3 are stored in an access-restricted state. The management server 4 sets an access level according to the user ID used in logging in from a client PC 3 and permits reading, rewriting, etc., of data according to the access level.

When a data output request, which instructs output of data, recorded in the database DB in the management server 4, to the exterior of the internal LAN 2 via the optical disk publisher 5, is received from a client PC 3, the management server 4 awaits for approval (issuing of a password) from a supervisor (in terms of hardware, a client PC 3 operated by a supervisor) with authority to permit data output and then permits the preparation of an optical disk (hereinafter, a CD shall be cited as an example of an optical disk and shall be described as CD 8) on which the requested data is written. When a CD 8 is issued or disposed, the management server 4 records CD issuing/disposal history information in the database DB. The CD issuing/disposal history information includes an ID of the CD that is issued, information for specifying the data written in the CD, the date of issue, the user ID of the user requesting the issue, the date of disposal, etc.

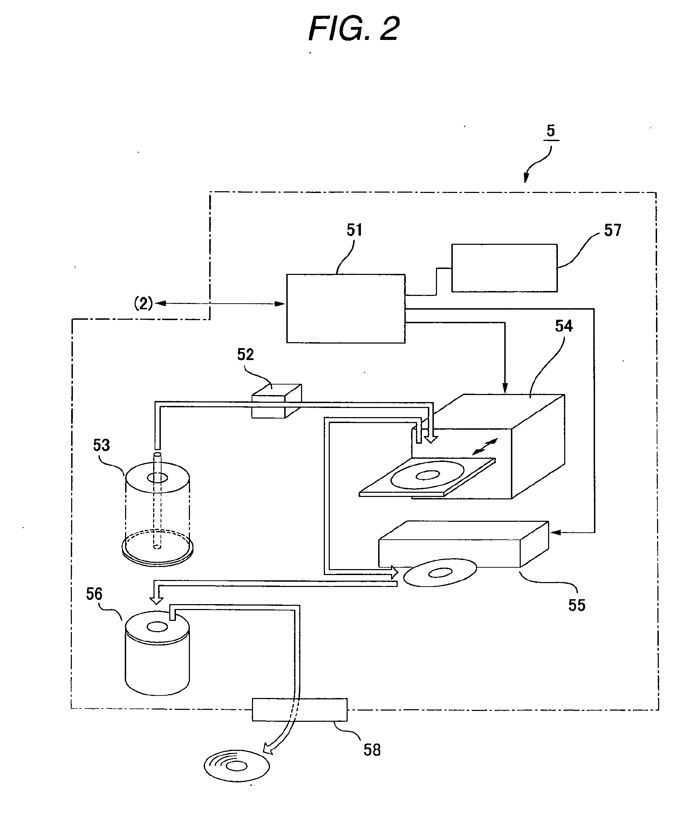

As shown in FIG. 2 to be described later, the optical disk publisher 5 has the same basic arrangement as a generally used optical disk publisher and has a writing drive for writing data into a CD or DVD, a printing means (for example, a label printing means 55 to be described later) for printing an image on a label surface of a CD, etc. A personal authentication means, constituted of a biometric device, an ID card reader, a numerical keypad for input, etc., is also provided, and arrangements are made so that a CD 8 is issued only to a specific user. The optical disk publisher 5 is connected to the optical device storage device 6 via a disk changer or other mechanism and is enabled to write a portion of the data, stored in the database DB of the management server 4, into a CD 8 and store the data in the optical disk storage device 6.

FIG. 2 is a schematic arrangement diagram of the optical disk publisher 5. The optical disk publisher 5 has a control unit 51 connected to the internal LAN 2, and an operation of issuing a CD 8 is performed under control by the control unit 51. That is, when preparation of a CD is requested from a client PC 3 and via the internal LAN 2, a CD, stocked in a supply stacker 53, is taken out by a media conveying means 52 and set in a drive 54. Data supplied via the internal LAN 2 are written into the CD 8 by the driver 54. The written data include identification information on the CD 8.

The CD 8, into which data have been written, is taken out from the drive 54 by the media conveying means 52. The CD 8 is then supplied to the label printing means 55, which has an inkjet head or other printing head, and the CD identification information, etc., are printed on the label surface. After printing, the CD 8 is taken out from the label printing means 55 by the media conveying means 52 and is temporarily stocked in the storage stacker 56. The identification information of the stocked CD are held in the database DB of the management server 4 in a manner associated with the ID of the user who requested the preparation of the CD.

The optical disk publisher 5 is provided with a personal authentication means 57. In order to remove a CD 8, into which data have been written, from a media removing port 58 of the optical disk publisher 5, a user ID and a password, which have been provided in advance, or a user ID and biometric information, etc., are input. Upon authentication by the personal authentication means 57, the CD identification information associated with the user ID is searched, and the corresponding CD 8 is taken out from the storage stacker 56 by the media conveying means 52. The CD 8 that is taken out is conveyed to the media removing port 58 and made accessible to a user. The CD 8 is thereby issued to the user. When the CD 8 is issued, the issuing history information of the CD are also stored at the management server 4 side.

The optical disk crasher 7 is for disposing a CD or other optical disk, on which writing has been performed and which has become unnecessary upon being returned from a customer, etc. Disposal refers to destroying the optical disk so as to disable reproduction of information written in the optical disk. For destruction of the written information, a known method, such as a method of mechanically destroying the recording surface of the CD, a method of chemically destroying the recording surface, etc., can be employed. The optical disk crasher 7 has a CD identification information input unit and, when disposing a CD, the CD identification information printed on the label surface of the CD is input. The CD identification information that has been input is supplied to the management server 4 via the internal LAN 2, and collation of the CD to be disposed is performed. When permission for disposal is provided from the management server 4, the optical disk crasher 7 is driven, and disposal of the CD is performed. The CD disposal history information (CD identification information, date of disposal, etc.) are also stored at the management server 4.

### (CD issuing operation in the first embodiment)

An example of a CD issuing operation (operation of outputting data to the exterior of the LAN (network) 2) by the data management system 1 according to the present embodiment shall now be described. The operation of the present embodiment shall be described using an example in which an employee A prepares a presentation material that includes confidential information, writes the presentation material into a CD-R, and loans the CD-R with a one week limit to a client company B.

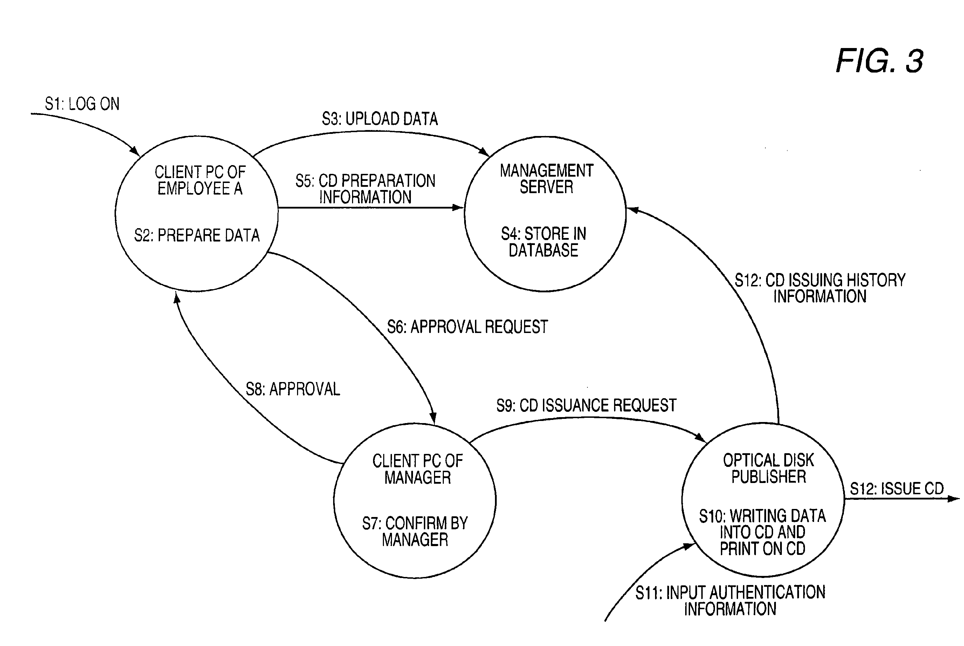

FIG. 3 is a schematic view for describing a data management flow in the data management system 1 according to the present embodiment.
First, the employee A uses his/her own ID to log into a client PC 3 on the internal LAN 2 (step S1). A material preparation application software is then started up, and the material is prepared on a screen of the display device 3B (step S2). When the material has been prepared, the prepared material is uploaded to the management server 4 (step S3) and stored in the database DB (step S4).

The employee A then starts up an optical disk publisher application software at the client PC, designates a label printing template that has been determined for external distribution and the prepared material, which is the data to be written, and clicks on a CD preparation instruction button. When the CD preparation instruction button is clicked on, a management number is provided automatically, and management information, such as the date and time of preparation, the ID of the employee A, the title of the material, the name of the client company, the loan term, etc., are transmitted to and recorded in the database DB of the management server 4 (step S5).

The employee A then confirms with a supervisor whether the prepared material can be written into a CD-R and loaned out to company B. For example, a confirmation application software is started up at the client PC 3, from which login has been performed, an approval request is transmitted, along with the information on the prepared material, the client company, the loan term, etc., to another client PC, by which the supervisor (manager) has logged into the internal LAN 2 (step S6). Upon receiving the approval request at the other client PC, the supervisor confirms the contents on the screen (step S7) and provides an approval if there are no problems. When the approval is provided, the approval information is transmitted to the client PC of the employee A (step S8), and the prepared material data are transmitted to the optical disk publisher 5 (step S9).

Upon receiving the prepared material data, the optical disk publisher 5 operates as described above and writes the prepared material data into a CD-R. The optical disk publisher also prints such information as the title, management number, date and time of preparation, company logo, "CONFIDENTIAL," etc., on the label surface of the CD-R (step S10). Also, the management number, the date and time of preparation, the ID of the employee A, and the title of the prepared material data are recorded as CD issuing history information in the optical disk publisher 5. The optical disk publisher 5 may also be arranged to apply a copy guard, encryption, or other security by a known method to the issued CD to prevent copying of the data, browsing of the data by persons besides users who are permitted access, etc.

The employee A then moves away from the client PC 3 and goes to the location of the optical disk publisher 5 to remove the prepared CD-R. The employee A then inputs his/her own ID and other authentication information (step S11), and upon authentication by the personal authentication means, removal of the prepared CD-R from the media removing port 58 of the optical disk publisher 5 is enabled and the process thereby completed (step S12). Thereafter, the CD issuing history information is transmitted to the management server 4 and recorded in the database DB (step S13). The employee A loans the CD-R thus issued to company B with the limit of one week.
The above is the flow of the CD issuing operation.

The flow of the CD disposal operation shall now be described.
For example, when the above-described CD-R is returned from company B, because there is no need to store this CD-R, it is disposed. In this case, the CD-R is loaded into the optical disk crasher 7 that is connected to the internal LAN 2. When the management number that is printed on the label surface of the CD-R is input into the optical disk crasher 7, the optical disk crasher 7 transmits the management number to the management server 4 and obtains permission for disposal.
As the method of obtaining the permission for disposal, the optical disk crasher may be arranged to read the CD identification number (management number) that is already written into the loaded disk, transmit this management number to the management server 4, and then obtain the permission for disposal. Furthermore, the CD identification information of the loaded disk may be confirmed from an application on a client PC, and the disposal permission may be provided from the client PC.
When the permission is provided, the recording surface of the CD-R that is loaded by the optical disk crasher 7 is destroyed by the optical disk crasher 7, and disposal is thus performed so that reproduction of the written information is made impossible. Upon receiving a signal indicating the end of disposal, the disposal history information, expressing that the CD-R of the management number to be disposed has been disposed, are recorded at the management server 4.

With the present embodiment, the issuing and disposal of a CD-R are performed by the above-described processes.

In order to facilitate the description and understanding, the above-described example is arranged to enable output of data to the exterior via the optical disk publisher 5. Obviously, connection with another network is also possible, and arrangements may be made to output data to the exterior by e-mail via the internet, etc. In such a case, existing security measures are applied according to the access levels of the respective data.

Also, with the above-described example, all data on the network are managed integratedly at the management server 4. Instead, just a portion of the data may be managed integratedly at the management server 4.

Furthermore, in order to enable a search of all data by accessing the management server 4 even when data, which are subject to management by the management server 4, are written in a CD or DVD, etc., and stored in the disk storage device 6, a document management software is preferably constructed.

Also, a plurality of optical disk publishers may be connected to the network and, for example, data that can be issued by each optical disk publisher may be distinguished according to a confidentiality level, etc.

### (Second Embodiment)

A second embodiment of a data management system using an external recording medium writing device according to the present invention shall now be described.

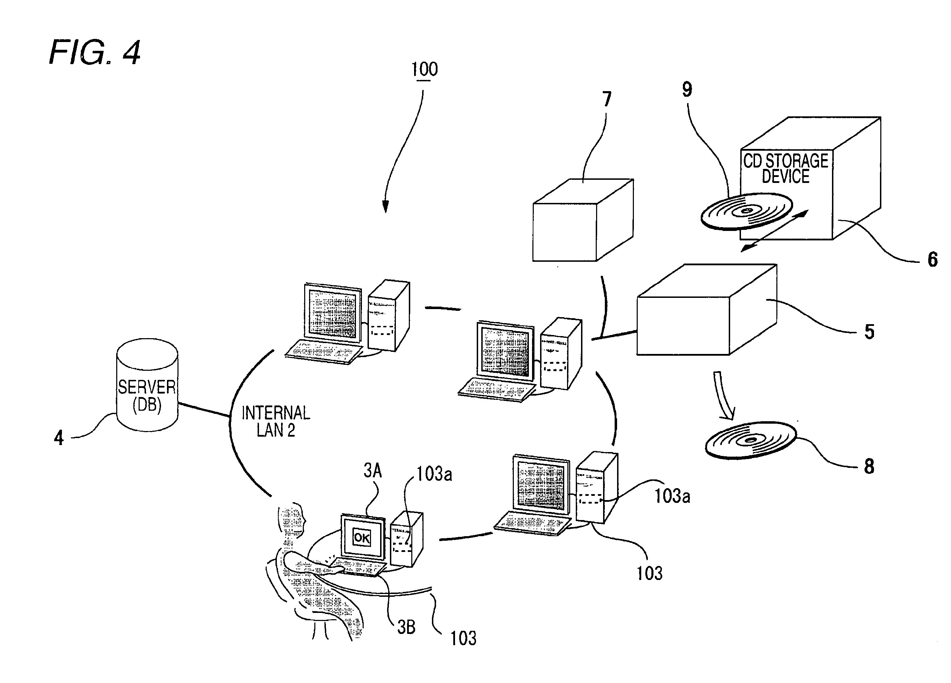

FIG. 4 is a schematic arrangement diagram of the data management system according to the second embodiment and, as with the first embodiment, shows an example of applying the system according to the present invention to an internal LAN of a corporation.

Although the data management system 100 according to the present embodiment is basically equivalent to the data management system 1 according to the first embodiment, the arrangement of each client PC 103, corresponding to the client PC 3 in the first embodiment, differs partially. Other hardware arrangements are equivalent to those of the first embodiment.

Each client PC 103 is arranged by providing a hard disk drive 103a in a client PC 3 of the first embodiment. Each client PC 103 can store data prepared on itself in the hard disk 103a and can also supply the data to the management server 4 via the internal LAN 2 and have the data be stored in the hard disk drive in the management server 4. Thus, although the management server 4 is basically equivalent to that of the first embodiment, it is not necessarily arranged so that all data prepared at each client PC 103 are managed integratedly by means of the database DB. The present embodiment is also the same as the first embodiment in that, in the login process from a client PC 3, the management server 4 permits the login based on the input of a user ID and password, provided to a user (employee) in advance, or input of the user ID and biometric information, etc.

Also, each client PC 103 is the same as the client PC 3 of the first embodiment in not having data output functions, such as a writing drive that writes data into an optical disk, magnetic disk, etc., and a printer driver that outputs data to a printer. Thus, although data can be output to the display device 3A, the data cannot be output by other means from the client PC 3 outside of the internal LAN 2.

When a data output request, which instructs data recorded in the hard disk inside a client PC 103 or recorded in the database DB in the management server 4 to be output to the exterior of the internal LAN 2 via the optical disk publisher 5, is received, the management server 4 awaits for approval (issuing of a password) from a supervisor (in terms of hardware, a client PC 3 operated by a supervisor) with authority to permit data output and then permits the preparation of an optical disk (hereinafter, described as CD.8) having the requested data written in. Also, when a CD 8 is issued or disposed, the management server 4 records the CD issuing/disposal history information in the database DB. The CD issuing/disposal history information include an ID of the CD that is issued, information for specifying the data written in the CD, the date of issue, the user ID of the user requesting the issue, the date of disposal, etc.

### (CD issuing operation in the second embodiment)

An example of a CD issuing operation (operation of outputting data to the exterior of the LAN (network) 2) by the data management system 1 according to the present embodiment shall now be described. The operation of the present embodiment shall be described using an example in which an employee A prepares presentation material that includes confidential information, writes the presentation material into a CD-R, and loans the CD-R with a one week limit to a client company B.

First, the employee A uses his/her own ID to log into a client PC 103 on the internal LAN 2. The material preparation application software is then started up, and the material is prepared on the screen of the display device 3B. After the material is prepared, the prepared material may be uploaded to the management server 4 and stored in the database DB or the prepared material may be stored in the hard disk 103a of the client PC 103. The description shall now be continued for the case where the prepared material is stored in the hard disk 103a of the client PC 103.

Even with data in the case of storage of the prepared material in the hard disk 103a of the client PC 103, the basic issuing operation is the same, and the employee A starts up the application software for the optical disk publisher 5 at the client PC 103, designates the label printing template that has been determined for external distribution and the prepared material, which is the data to be written, and clicks on the CD preparation instruction button. The process thereafter is the same as that shown in FIG. 3.

In the present embodiment, the issuing of a CD-R is performed by the above process.

### (Third Embodiment)

A third embodiment of a data management system using an external recording medium writing device according to the present invention shall now be described.

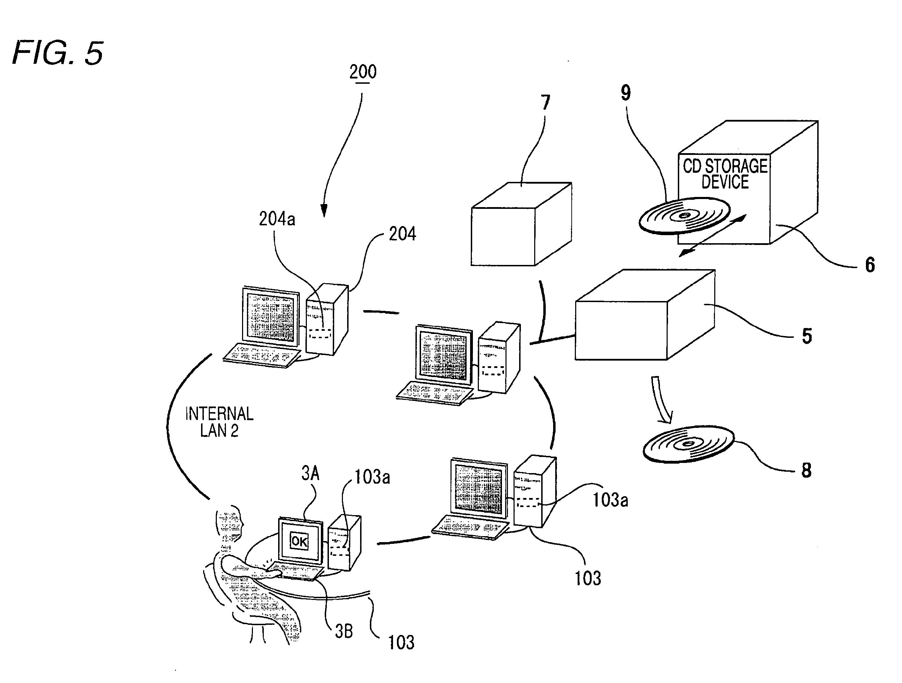

FIG. 5 is a schematic arrangement diagram of the data management system according to the third embodiment and, as with the first and second embodiments, shows an example of applying the system according to the present invention to an internal LAN of a corporation.

Although the data management system 200 according to the present embodiment is basically equivalent to the data management system 100 according to the second embodiment, unlike the second embodiment, the management server 4, which was provided as a solitary unit, is removed, and the functions of the management server 4 are incorporated in a client PC 204, which is one of the client PCs. For example, the client PC 204 has a hard disk drive 204a as a large-scale storage medium and is arranged to form the same database DB as that of the management server 4 of the first or second embodiment in the hard disk drive 204a. That is, the present embodiment has an arrangement in which the client PC 204 has the management server functions. Arrangements and functions besides this are the same as those of the first embodiment shown in FIGS. 1 and 3.

With the present embodiment, the security-managed arrangement of the first embodiment and the second embodiment can be realized without installing a special server machine in the LAN. The cost for constructing the data management system 200 can thus be reduced, and the arrangement is also advantageous in terms of space because an installation location for a server machine is not required.

### (Fourth Embodiment)

A fourth embodiment of a data management system using an external recording medium writing device according to the present invention shall now be described.

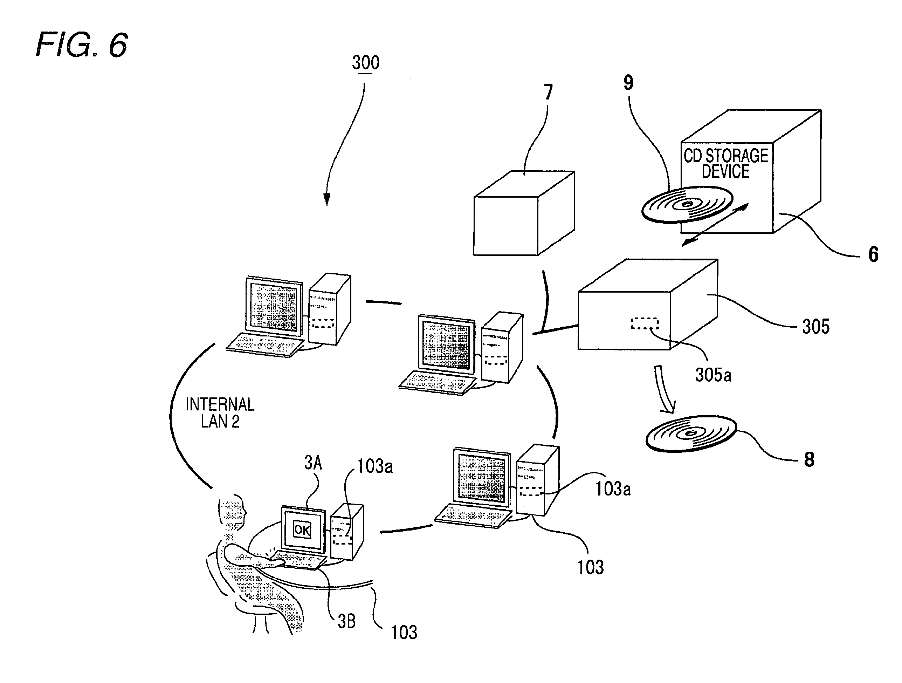

FIG. 6 is a schematic arrangement diagram of the data management system according to the fourth embodiment and, as with the first to third embodiments, shows an example of applying the system according to the present invention to an internal LAN of a corporation.

Although the data management system 300 according to the present embodiment is basically equivalent to the data management system according to the first or second embodiment, unlike the first or second embodiment, the management server 4, which was provided as a solitary unit, is removed, and the functions of the management server 4 are incorporated inside an optical disk publisher 305. For example, the optical disk publisher 305 has a hard disk drive 305a as a large-scale storage medium and is arranged to form the same database DB as that of the management server 4 of the first or second embodiment in the hard disk drive 305a. That is, the present embodiment has an arrangement in which the optical disk publisher 305 has the management server functions. Arrangements and functions besides this are the same as those of the first embodiment shown in FIGS. 1 and 3.

With the present embodiment, the security-managed arrangement of the first to third embodiments can be realized by simply introducing the optical disk publisher 305 into the LAN and without installing a special server machine in the LAN or providing a certain, single client PC with the management server functions. The data management system 300 can thus be introduced readily and the cost for constructing the data management system 300 can thus be reduced. The arrangement is also advantageous in terms of space because an installation location for a server machine is not required.

In the above description, besides a CD, DVD, or other optical disk or magneto-optical disk, a semiconductor memory, a magnetic recording medium, or other form of medium may be used as the external recording medium. Also, as the external recording medium writing device, not only can a device that performs writing and issuing operations on external recording media of a single format be obviously used but a device having a function of performing writing and issuing operations on external recording media of different formats may also be used.

### BRIEF DESCRIPTION OF THE DRAWINGS

[Fig. 1] A schematic configuration diagram showing a first embodiment of a data management system according to the present invention.
[Fig. 2] A schematic configuration diagram showing an optical disk publisher of Fig. 1.
[Fig. 3] A view showing a data management flow in the data management system of the first embodiment.
[Fig. 4] A schematic configuration diagram showing a second embodiment of a data management system according to the invention.
[Fig. 5] A schematic configuration diagram showing a third embodiment of a data management system according to the invention.
[Fig. 6] A schematic configuration diagram showing a fourth embodiment of a data management system according to the invention.

### DESCRIPTION OF REFERENCE NUMERALS AND SIGNS

1: data management system, 2: internal LAN, 3: client PC, 4: management server, 5: optical disk publisher, 6: optical disk storage device, 7: optical disk crasher, 8 and 9: CD

## Claims

1. A data management method in a network to which a management server, a plurality of client terminals having a data processing function and an external recording medium writing device that writes data into an external recording medium and issues the external recording medium are communicably connected, the data management method comprising:
a step for outputting, from one of the client terminals, a writing request for writing data into the external recording medium;
a step for permitting, in another one of the client terminals, the external recording medium writing device to write the data into the external recording medium in response to the writing request;
a step for recording the data into the external recording medium by the external recording medium writing device in response to the permission; and
a step for removably outputting the external recording medium into which the data has been written from the external recording medium writing device in response to input of predetermined authentication information corresponding to the permission.

2. The data management method as set forth in claim 1, wherein the data is integratedly managed by the management server.

3. The data management method as set forth in any of claims 1 or 2, wherein:
a user who requests the output of the data is specified under management of the management server when the data is output; and
only the specified user is permitted to remove the external recording medium into which the data has been written from the external recording medium writing device.

4. The data management method as set forth in any of claims 1 to 3, wherein:
the management server manages a history for issuing the external recording medium by the external recording medium writing device; and
the history includes at least identification information for identifying the issued external recording medium, information for specifying the issued data, information for identifying issue destination and information regarding the issuing date and time.

5. The data management method as set forth in any of claims 1 to 4, wherein when issuing the external recording medium, the information for identifying the external recording medium is written and the information is printed on a label surface.

6. The data management method as set forth in any of claims 1 to 5, the data management method using the external recording medium writing device, wherein at least a portion of the data under the management of the management server is written on the external recording medium by the external recording medium writing device and the external recording medium is managed.

7. The data management method as set forth in claim 4, wherein:
an external recording medium disposer for destroying recorded information on the external recording medium that has become unnecessary, is connected to the network; and
the management server manages permission and denial of disposal of issued external recording medium and a history of disposal.

8. The data management method as set forth in any of claims 1 to 7, wherein the external recording medium writing device performs writing and issuing operation on at least one of an optical disk, magneto-optical disk, semiconductor memory and magnetic recording medium as the external recording medium.

9. The data management system in which a management server, a plurality of client terminals having a data processing function and an external recording medium writing device that writes data into an external recording medium and issues the external recording medium are communicably connected via a network, wherein:
one of the client terminals outputs a writing request for writing data into the external recording medium to the other one of the client terminals;
another one of the client terminals permits the external recording writing device to write the data into the external recording medium in response to the writing request; and
the external recording medium writing device records the data into the external recording medium in response to the permission and removably outputs the external recording medium into which the data has been written in response to input of predetermined authentication information corresponding to the permission.

10. The data management system as set forth in claim 9, wherein the data is integratedly managed by the management server.

11. The data management system as set forth in any of claims 9 or 10, wherein:
the management server specifies a user who requests the output of the data via the client terminals; and
the external recording medium writing device permits only the specified user to remove the external recording medium into which the requested data has been written.

12. The data management system as set forth in any of claims 9 to 11, wherein:
the management server manages a history for issuing the external recording medium by the external recording medium writing device; and
the history includes at least identification information for identifying the issued external recording medium, information for specifying the issued data, information for identifying issue destination and information regarding the issuing date and time.

13. The data management system as set forth in claim 12, wherein when issuing the external recording medium, the external recording medium writing device writes the information for identifying the external recording medium and prints the identification information on a label surface of the external recording medium.

14. The data management system as set forth in any of claims 9 to 13, wherein:
the data management system includes a medium storage device that stores the external recording medium issued from the external recording medium writing device; and
the management server writes at least a portion of the data into the external recording medium by the external recording medium writing device and stores the written external recording medium in the medium storage device, thereby managing the external recording medium.

15. The data management system as set forth in any of claims 9 to 14, comprising:
an external recording medium disposer for destroying recorded information on the external recording medium that has become unnecessary,
wherein the management server manages permission and denial of disposal of issued external recording medium and a history of disposal based on the identification information that has been provided on the external recording medium when issuing.

16. The data management system as set forth in any of claims 9 to 15, wherein:
the external recording medium is one of an optical disk, magneto-optical disk, semiconductor memory and magnetic recording medium, and
the external recording medium writing device performs writing operation and issuing operation on at least one of these external recording medium.
